Europäisches Patentamt

(19) European Patent Office

Office européen des brevets

(11) Publication number : **0 314 608 B1**

# EUROPEAN PATENT SPECIFICATION

(12)

(45) Date of publication of patent specification :
**14.09.94 Bulletin 94/37**

(21) Application number : **88730232.1**

(22) Date of filing : **25.10.88**

(51) Int. Cl.⁵ : **G03B 35/00**

(54) Method of and apparatus for producing three-dimensional sculpture works on a desired reduced scale.

(30) Priority : **27.10.87 JP 270926/87**

(43) Date of publication of application :
**03.05.89 Bulletin 89/18**

(45) Publication of the grant of the patent :
**14.09.94 Bulletin 94/37**

(84) Designated Contracting States :
**DE FR GB IT**

(56) References cited :
**CH-A- 182 977**
**DE-A- 3 048 457**
**FR-A- 2 418 099**
**US-A- 891 013**
**US-A- 3 580 758**

(73) Proprietor : **RITTAISHASHINZO CO., LTD.**
**12-4, 4-chome, Minamiohi**
**Shinagawa-ku**
**Tokyo (JP)**

(72) Inventor : **Morioka, Kimihiko c/o**
**Rittaishashinzo Co., Ltd.**
**12-4, 4-chome**
**Minamiohi**
**Shinagawa-ku**
**Tokyo (JP)**

(74) Representative : **Meissner, Peter E., Dipl.-Ing.**
**et al**
**Meissner & Meissner,**
**Patentanwaltsbüro,**
**Postfach 33 01 30**
**D-14171 Berlin (DE)**

## Description

Field of the Invention and Related Art Statement:

The present invention relates to a method of, and an apparatus for, producing three-dimensional sculpture works on a desired reduced scale.

There have heretofore been US-A-891013, FR-A-2418099 and US-A-3580758 which were granted as methods of producing threedimensional sculpture works.

In these patents, a method of producing threedimensional sculpture works comprises:

a) a photographic process comparising the steps of:
- arranging a plurality of photographic cameras at a predetermined distance from an object to be reproduced and a first plurality of optical projectors;
- loading each of said first plurality of optical projectors with a transparent screen having a plurality of parallel lines;
- projecting said transparent screens onto said object from said first plurality of projectors, and
- taking with said cameras photographic pictures of the striped pattern resulting from the projection of said screens onto said object and

b) a three-dimensional sculpture works producing process comprising the steps of:
- arranging a second plurality of projectors around a mass of material to be molded in similar relation with said object and at a reduced distance, that is a distance from said mass, smaller than that between said first projector and said object
- loading said second plurality of projectors with said photographic pictures taken with said cameras,
- projecting said photographic pictures with said second plurality of projectors onto said mass and modelling manually said mass to make the projected lines meet and coincide with each other, thereby obtaining a reduced three-dimensional sculptural copy of said object.

With respect to these prior arts, one example is raised and explained in the concrete and their problems are pointed out as follows.

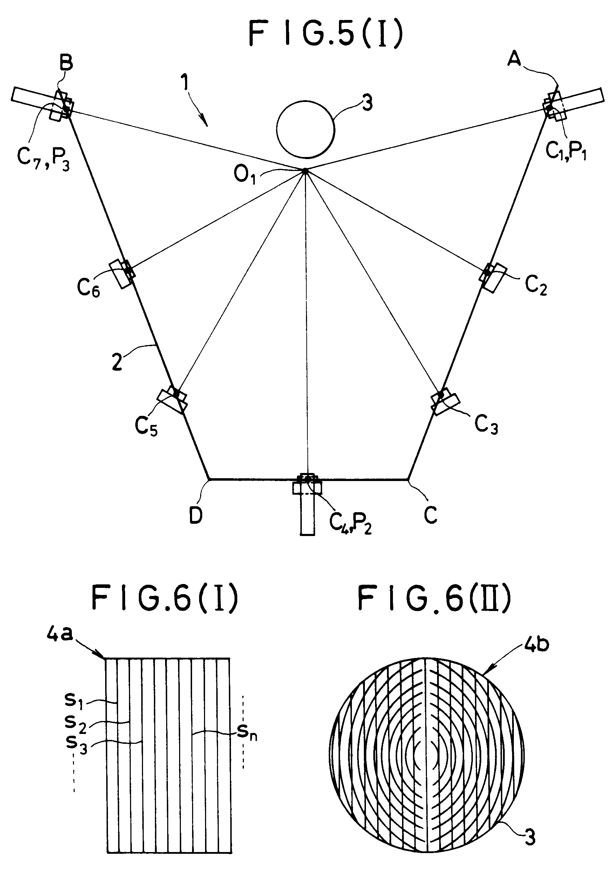

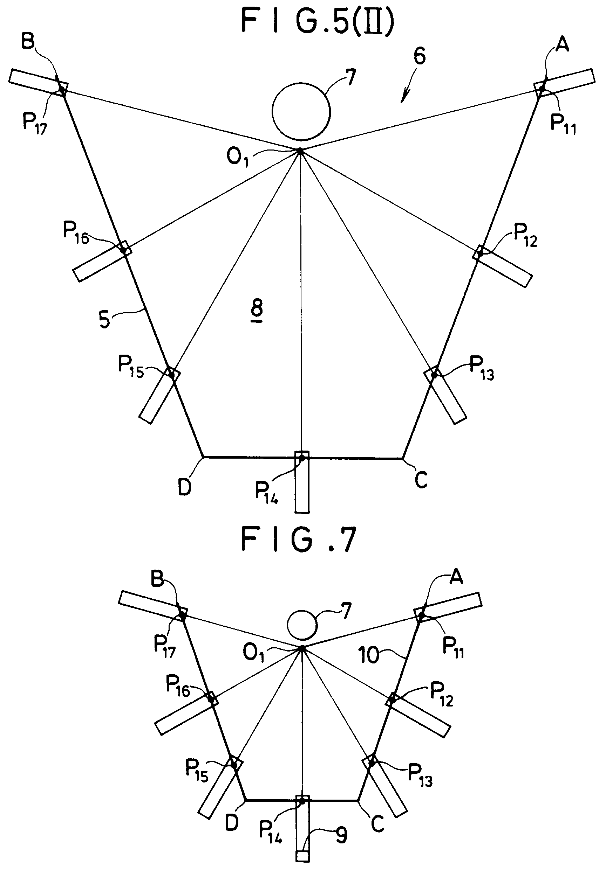

One of the typical stereophotographic processes known in the art for this purpose of producing a three-dimensional sculpture is now shown by way of example with reference to the accompanying drawings, FIGS. 5 through 7.

In general, a common method of producing three-dimensional sculptures is comprised of a stereophotographic process and a sculpture manufacturing process.

In the stereophotographic process, there is employed, for instance, such an arrangement of stereophotographic processing apparatus as designated generally at a reference numeral 1 in FIG. 5(I).

This stereophotographic processing apparatus 1 is seen comprising in construction a nearly letter C-shaped frame in symmetrical shape designated at 2, seven photographic cameras at $C_1$, $C_2$, $C_3$, $C_4$, $C_5$, $C_6$, $C_7$, and three units of projectors at $P_1$, $P_2$ $P_3$, which are all arranged as shown. In this specific arrangement, the reference characters $C_1$ through $C_7$ and $P_1$ through $P_3$ not only represent a group of photographic cameras and a group of projectors, respectively, but also represent typically the optical lenses per se belonging to these components for convenience in the description to follow.

Referring more specifically to this arrangement, it is seen that the camera $C_4$ is disposed in the center position of the frame 2, and also that the other cameras $C_3$, $C_2$, $C_1$ and $C_5$, $C_6$, $C_7$ are disposed discretely along the frame 2 in a symmetrical relationship with respect to the central camera $C_4$. Also, the projectors $P_1$ and $P_3$ are seen disposed in the neighborhood of the cameras $C_1$ and $C_7$ in a symmetrical relationship with respect to the projector $P_2$ which is disposed in the neighborhood of the central camera $C_4$, respectively. In addition, there is disposed, for example, a person to be photographed as an object 3 in the open mouth area of the frame 2, facing towards the central camera $C_4$, which person is shown to be a sphere for clarity in representation. Further to the location of this object or person 3, it is to be noted that the cameras $C_1$ through $C_7$ and the projectors $P_1$ through $P_3$ are disposed concentering at a specific point $0_1$ which is slightly before the person to be photographed, as seen schematically in the figure.

Each of the projectors $P_1$ through $P_3$ is fitted with a screen 4a with a number of lines running vertically in parallel or stripes $S_1$, $S_2$ ,,, $S_n$ as shown in FIG. 6 (I), and the projectors are operated to throw striped patterns from the screens 4a onto the object to be photographed 3. On and around the surface of the object 3, there are projected the striped patterns 4b as shown in FIG. 6 (II), and the object 3 projected with such striped patterns thereon is then photographed all at once by the group of cameras $C_1$ through $C_7$ arranged around the object to obtain photographic pictures in negative and/or positive (hereinafter, referred to as "pictures" for convenience in the description).

Now, referring to the sculpture manufacturing process which is another part comprising the method of producing three-dimensional sculptures, as typically shown in FIG. 5(II), there is employed an apparatus 6 for producing solid sculptures which comprises a plurality of projectors $P_{11}$ through $P_{17}$ corresponding in quantity to the photographic cameras $C_1$ through $C_7$ to replace them and disposed in the corresponding locations for cameras existing along the extension of the frame 5. Next, the photographed object 3 is replaced on the same location with a mass of material 7, for example, a lump of clay for the preparation of an original form for a three-dimensional sculpture on the same location.

In this specific arrangement, the reference characters $P_{11}$ through $P_{17}$ not only represent a group of projectors, respectively, but also represent typically the optical lenses per se belonging to these projectors for convenience in the description to follow.

These projectors $P_{11}$ through $P_{17}$ are loaded with the photographic pictures taken by the group of cameras $C_1$ through $C_7$ disposed in the same positions, respectively. These pictures contain the scenes of projection on and around the outer shape in the surface of the object 3 such that the patterns 4b having the plurality of parallel lines $S_n$ of the screens 4a projected from the projectors $P_1$ through $P_3$ are deformed accordingly to its outer surface configuration, when projected thereupon in the previous photographing process (see FIG. 6(II)).

When these pictures are projected onto the outer surface of the mass of material 7 from the projectors $P_{11}$ through $P_{17}$ noted above, there are seen a plurality of shadow lines or stripes which correspond accordingly to the parallel lines $S_n$ of the screen 4a. Then, a next step is to adjust the surface configuration of the mass of material 7 by removing or adding an appropriate amount of material from the surface thereof in such a manner that each of such shadow lines or stripes projected separately from each of the projectors may coincide with each other on the outer surface thereof. When each of the shadow lines or stripes may exactly meet with each other on the surface of the mass of modeling material 7, there is now attained a finish in the modeling of the material 7 with a satisfactory expression in similarity or resemblance with the object 3 to follow. This is a typical example known in the art to produce a three-dimensional sculpture of an object by way of the stereophotographic process.

Now, in the above description, while different frames 2 and 5 were put to use in the stereophotographic process and the sculpture producing process for convenience, operators may use one and the same frame in the both process, and in this case, they will naturally take the trouble to replace the groups of cameras $C_1$ through $C_7$ and projectors $P_1$ through $P_3$ with the other group of projectors $P_{11}$ through $P_{17}$, when shifting from the stereophotographic process to the sculpture processing process, accordingly. Or else, you may use another group of projectors mounted on a given means instead of using the frame 5 to an equal effect.

Incidentally, giving an idea of dimensions of the frame 2 with the stereophotographic processing apparatus 1, the following is an example.

If the both ends of the frame 2 are designated at A and B, with the corners C and D in the curved extension, $\overline{AC} = \overline{BD} = 1036mm$; $\overline{DC} = 496mm$; $\overline{C_1O_1} = \overline{C_7O_1} = 650mm$; $\overline{C_2O_1} = \overline{C_6O_1} = 530mm$; $\overline{C_3O_1} = \overline{C_5O_1} = 670mm$; and $\overline{C_4O_1} = 800mm$, respectively.

In this apparatus, it is assumed that the focal length of the lens of each of the cameras $C_1$, $C_2$, $C_6$, $C_7$, and of the projectors $P_1$, $P_3$ is 50mm, and that the focal length of the lens of each of the cameras $C_3$, $C_4$, $C_5$, and the projectors $P_2$ is 75mm, respectively.

Also, it is assumed that the focal length of the lens used in each of the projectors $P_{11}$, $P_{12}$, $P_{16}$, $P_{17}$ is 50mm, and that of the lens employed in each of the projectors $P_{13}$, $P_{14}$, $P_{15}$ is 75mm, respectively.

More specifically, it is notable that the lens with the same focal length is used for the components such as those cameras $C_1$ through $C_7$ and the projectors as those projectors $P_1$ through $P_3$ and $P_{11}$ through $P_{17}$ disposed in the corresponding positions for the stereophotographic process and the sculpture processing process.

This is the case for producing a three-dimensional sculpture with the life size from the object 3 by way of the stereophotographic process. Besides, it is required sometimes to make a sculpture with a reduced scale of, for instance, 80%, 50% or 40% of the object 3.

For this purpose, it is contemplated that a 50% down-scaled positive is produced from the original pictures taken by the group of cameras $C_1$ through $C_7$, and that thus-obtained reduced scale positive, the frame 5 for producing the conventional life-size three-dimensional sculpture and the group of projectors $P_{11}$ through $P_{17}$ disposed on this frame are used to obtain a 50% down-scaled sculpture. However, with this method wherein there is a long distance between the group of projectors $P_{11}$ through $P_{17}$ and the mass of material 7, it was so difficult in practice to make an adjustment to have the striped patterns 4b meet and coincide with each other as appearing when projected upon the material from each of the projectors $P_{11}$ through $P_{17}$, and consequently, this method has not been employed in practice.

In this respect, therefore, it is the common practice in the conventional process to reduce the distance from each of the projectors $P_{11}$ through $P_{17}$ to the point $O_1$ in the three-dimensional sculpture producing process, if necessary. In this manner, when it is required to have a sculpture reduced to a 50% or more down-scale, as it is difficult to obtain a sufficient working space 8 between the frame 5 and the mass of material 7 large enough for the operator to stand in, the operator would then have to once step out of the working space 8 and make an adjustment work from the outside of the frame 5.

With this arrangement, while it is advantageously feasible in practice to make the size of the frame 5 smaller accordingly to a required scale of reduction on the part of a sculpture, it would inevitably make the projectors $P_{11}$ through $P_{17}$ greater in relative dimensions to the frame, which may possibly obstruct a sculpture work, and which would bring a difficulty for the operator while performing his job for adjustment from the outside of the frame 5.

Here now is a definite description on the practice of a sculpture producing work reduced in scale down to 50% with reference to FIG. 7, in comparison with the production of a life-size sculpture.

Now, assuming that the focal length of the lens employed in the projectors $P_{11}$ through $P_{17}$ is designated "f" and that the distance from the lens to the point $O_1$ is defined "a" and the distance from the lens to the picture 9 of the object 3 shown in FIG. 6(II) is defined "b", respectively, there is obtained the following relationship in terms of equation;

$$\frac{1}{a} + \frac{1}{b} = \frac{1}{f}$$

With this equation, the distances a and b in each of the projectors $P_{11}$ through $P_{17}$ may be obtained as follows.

### (1) For a life-size sculpture

The dimensions of the frame 5 for mounting the projectors $P_{11}$ through $P_{17}$ is as large as the one used in the stereophotographic process noted hereinbefore.

The distance b may be obtained as follows.
(i) For the projector $P_{14}$
With a = 800mm and f = 75mm;

$$\frac{1}{800} + \frac{1}{b} = \frac{1}{75}$$

then, b = 82.76mm
(ii) For the projectors $P_{13}$ and $P_{15}$
With a = 670mm and f = 75mm;

$$\frac{1}{670} + \frac{1}{b} = \frac{1}{75}$$

then, b = 84.45mm
(iii) For the projectors $P_{12}$ and $P_{16}$
With a = 530mm and f = 50mm;

$$\frac{1}{530} + \frac{1}{b} = \frac{1}{50}$$

then, b = 55.21mm
(iv) For the projectors $P_{11}$ and $P_{17}$
With a = 650mm and f = 50mm;

$$\frac{1}{650} + \frac{1}{b} = \frac{1}{50}$$

then, b = 54.17mm

### (2) For a 50% down-scale sculpture

The dimensions of the frame 10 for mounting the projectors $P_{11}$ through $P_{17}$ is half as large as the one used in the stereophotographic process taken previously. In this case, the distance "b" is obtained as follows. Taking a ratio of "c" with respect to the distance "b" for the life-size sculpture, c may be obtained as follow.
(i) For the projector $P_{14}$
With a = 400mm and f = 75mm;

$$\frac{1}{400} + \frac{1}{b} = \frac{1}{75}$$

then, b = 92.31mm
c = 92.31 / 82.76 = 1.115
(ii) For the projectors $P_{13}$ and $P_{15}$
With a = 335mm and f = 75mm;

$$\frac{1}{335} + \frac{1}{b} = \frac{1}{75}$$

then, b = 96.63mn
c = 96.63 / 84.45 = 1.144
(iii) For the projectors $P_{12}$ and $P_{16}$
With a = 265mm and f = 50mm;

$$\frac{1}{265} + \frac{1}{b} = \frac{1}{50}$$

then, b = 61.63mm
c = 61.63 / 55.21 = 1.116
(iv) For the projectors $P_{11}$ and $P_{17}$
With a = 325mm and f = 50mm;

$$\frac{1}{325} + \frac{1}{b} = \frac{1}{50}$$

then, b = 59.09mm
c = 59.09 / 54.17 = 1.091

As is apparent from the example above, in the case with the reduction scale of 50%, though the overall size of the frame 10 is half as large as the frame 5, the distance b in connection with the projectors $P_{11}$ through $P_{17}$ has no substantial difference in comparison with the case for the life-size sculptural work.

It means that the overall length of projectors P11-P17 is large, namely, the projectors P11-P17 are arranged in such a manner that the rear part thereof is largely protruded outwardly of the frame 10 (See Fig. 7).

This was one of the disadvantageous factors in the manual operation taken by the operator to reach the mass of material 7 placed in the center of the working area from the outside thereof.

Also, for the case of 50% down-scale sculpture, there may exist a substantial variation in the ratio "c", it was required in practice to prepare positives taken by the cameras $C_1$ through $C_7$ for a reduced sculpture by modifying them so that they may well fit each of the projectors $P_{11}$ through $P_{17}$. However, these positives may differ for each of the projectors $P_{11}$ through $P_{17}$ accordingly with differences in the rate of enlargement which may occur from differences in the ratio "c", and consequently, they cannot be used commonly for all these projectors, thus requiring them to be prepared separately. This may undoubtedly cause a substantial trouble in the preparation of such positives, thus making one of the causes that a scaled-down sculpture work cannot escape a poor productivity.

In addition, there is a problem such that a thinner sculpture may possibly be obtained by way of the conventional method in comparison with the case of life-size sculptural work.

In the above mentioned prior arts, however, projectors of the same type as those in use at the time of photograph taking are used so that the manufacture of modified projecting screens become costly. At the same time, for example, as shown in Fig. 7, it is impossible to reduce the distance between the projecting screen (8) and the lens of the projector (P14) and to reduce the extent of the outward protrusion of the rear part of the projector.

Therefore, the rear part of the projector becomes a hindrance at the time of operation so that it has heretofore been impossible to facilitate the property of sculpture manufacture.

Object and Summary of the Invention:

In consideration of such drawbacks which have been inevitable in the conventional process, it would be desirable to attain an efficient solution therefor.

The present invention is essentially directed to the provision of a useful solution to such a difficulty in practice as referred to above and experienced in the conventional stereophotographic process for producing works of sculpture.

Therefore, it is a primary object of the present invention to provide an improved stereophotographic process for producing a three-dimensional sculpture with a reduced scale, more specifically with a reduction ratio of 50% or more to an original object to be sculptured.

According to the present invention as defined in Claim 1, the aforesaid problems of the prior arts have been eliminated and the object of the present invention has been achieved by the best method such that the focal distance of the lens of the second projector for use at the time of reduction of said object and the projecting screen in the second projector is reduced to the same extent of reduction of said mass.

In this way, it becomes possible to reduce the distance between the lens of the second projector and the reduced mass and to shorten the distance between the projecting screen to a minimum.

Additional features and advantages of the invention will now become more apparent to those skilled in the art upon consideration of the following detailed description of a preferred embodiment exemplifying a best mode of carrying out the invention as presently perceived. The detailed description refers particularly to the accompanying drawings, in which like parts are designated at like reference numerals.

Brief Description of the Drawings:

FIGS. 1 and 2 are schematic top plan views showing by way of a preferred concept the general construction of a stereophotographic arrangement of cameras and three-dimensional sculpture producing apparatus which employs the improved stereophotographic process according to the present invention;

FIGS. 3 and 4 are like schematic views showing another embodiment of the invention, in which FIG. 3 is a conceptual view showing the manner to process a positive photographic picture and FIG. 4 is a like conceptual view showing the manner of producing a three-dimensional relief;

FIGS. 5(I) and 5(II) are schematic top plan views showing conceptually the general construction of a stereophotographic arrangement of camera and sculptural apparatus employing the conventional three-dimensional sculpture process;

FIG. 6 is a schematic view showing an example of a screen to be projected onto an object, and

FIG. 7 is a schematic top plan view showing conceptually the general arrangement of a typical conventional sculpture producing process.

Detailed Description of Preferred embodiments:

The present invention will now be explained in detail on an improved stereophotographic process of producing a three-dimensional sculpture of a three-dimensional object by way of scales of reduction to 50% and 60% (hereinafter referred to as "50% sculpture" and "40% sculpture") as preferred embodiments thereof with reference to the accompanying drawings herewith.

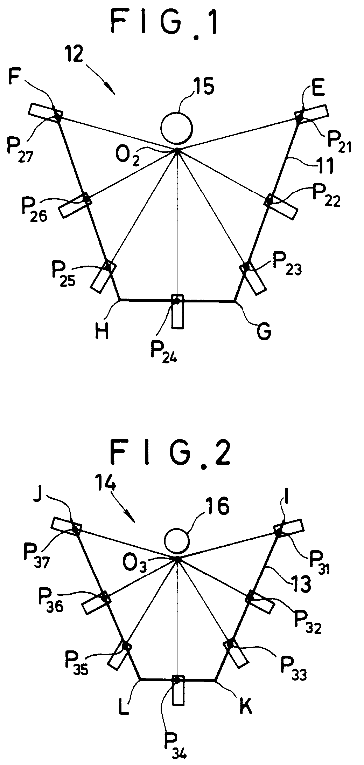

The following description in conjunction with FIG. 1 will be directed to the 50% sculpture, and the description with FIG. 2 will be concerned with the 40% sculpture.

Incidentally, the present method of producing works of sculpture by way of a preferred embodiment of the present invention is comprised of a stereophotographic process and a sculpture producing process as in the conventional process.

So far as the stereophotographic process is concerned, it may be conducted in all the same manner as the conventional process using the group of cameras 1, and therefore, no detailed description will be made in this connection (see FIG. 5(I)).

Referring now to the sculpture producing process by way of this embodiment to produce a 50% three-dimensional sculpture, firstly, a frame 11 is prepared proportionally to the shape of and accordingly to the scale of reduction to 50% on the part of the frame 2, and then there are disposed a group of projectors $P_{21}$ through $P_{27}$, in the corresponding locations for the group of cameras $C_1$ through $C_7$ so as to form a three-dimensional sculpture producing apparatus 12 (see FIG. 1). The lenses of these projectors $P_{21}$ through $P_{27}$ have a focal length half as long as that of the lens-

es of the cameras $C_1$ through $C_7$, respectively.

When producing a 40% sculpture, a frame 13 is prepared proportionally in shape of and accordingly to a scale of reduction of 60% with respect to the frame 2 for the stereophotographic process, and then, a group of projectors $P_{31}$ through $P_{37}$ is located operatively along the extension of the frame 13 in position corresponding to those for the group of cameras $C_1$ through $C_7$ of the stereophotographic apparatus 1, thus providing the three-dimensional sculpture producing apparatus 14 (see FIG. 2). Each of the lenses of these projectors $P_{31}$ through $P_{37}$ have a focal length reduced to 60% of that of the lens of the corresponding one of the cameras $C_1$ through $C_7$, respectively.

Referring now to FIG. 1, the both end points of the frame 11 are designated "E" and "F", and the lower corners thereof are designated "G" and "H", and next to FIG. 2, the both end points of the frame 13 are designated "I" and "J", and the lower corners thereof are designated "K" and "L", respectively.

Also, the reference characters $P_{21}$ through $P_{27}$, and $P_{31}$ through $P_{37}$ are adapted to designate the projectors, as well as the lenses per se thereof, conceptually.

Moreover, there are seen reference points $O_2$ and $O_3$ in the frames 11 and 13 in the central position thereof corresponding to that of the point $O_1$, respectively. A mass of material is shown by the references 15 and 16.

Now, it is assumed referring to the 50% down scale that the focal length of each of the lenses of the projectors $P_{21}$, $P_{22}$, $P_{26}$ and $P_{27}$ is 25mm, and the focal length of each of the lenses of the projectors $P_{23}$, $P_{24}$ and $P_{25}$ is 37.5mm, respectively.

It is also assumed referring to the 60% down scale that the focal length of each of the lenses of the projectors $P_{31}$, $P_{32}$, $P_{36}$ and $P_{37}$ is 20mm, while the focal length of each of the lenses of the projectors $P_{33}$, $P_{34}$ and $P_{35}$ is 30 mm, respectively.

Now, assuming that the distance from the lens of each of the projectors $P_{21}$ through $P_{27}$ or $P_{31}$ through $P_{37}$ to the point $O_2$ or $O_3$ is a, and that the distance between each of these lenses and the picture or screen loaded in the projectors is b, there are obtained the distances a and b as follows, using the relationship as obtained from the equation;

$$\frac{1}{a} + \frac{1}{b} = \frac{1}{f}$$

Also, shown is a ratio "c" taken in proportion to the value of "b" in the case of a life-size sculpture manufacturing process.

(1) For a 50% sculpture

The dimensions are as follows; EG = FH = 518mm; $\overline{HG}$ = 248mm; $\overline{P_{21}O_2}$ = $\overline{P_{27}O_2}$ = 325mm; $\overline{P_{22}O_2}$ = $\overline{P_{26}O_2}$ = 265mm; $\overline{P_{23}O_2}$ = $\overline{P_{25}O_2}$ = 335mm; $\overline{P_{24}O_2}$ = 400mm

(i) For the projector $P_{24}$
With a = 400mm and f = 37.5mm;

$$\frac{1}{400} + \frac{1}{b} = \frac{1}{37.5}$$

then, b = 41.38mm
c = 41.38 / 82.76 = 0.50

(ii) For the projectors $P_{23}$ and $P_{25}$
With a = 335mm and f = 37.5mm;

$$\frac{1}{335} + \frac{1}{b} = \frac{1}{37.5}$$

then, b = 42.23mm
c = 42.23 / 84.45 = 0.50

(iii) For the projectors $P_{22}$ and $P_{26}$
With a = 265mm and f = 25mm;

$$\frac{1}{265} + \frac{1}{b} = \frac{1}{25}$$

then, b = 27.60mm
c = 27.60 / 55.21 = 0.50

(iv) For the projectors $P_{21}$ and $P_{27}$
With a = 325mm and f = 25mm;

$$\frac{1}{325} + \frac{1}{b} = \frac{1}{25}$$

then, b = 27.08mm
c = 27.08 / 54.17 = 0.50

(2) For a 40% sculpture

The dimensions are as follows; $\overline{IJ}$ = $\overline{KL}$ = 414.4mm; $\overline{LJ}$ = 30mm; $\overline{O_{32}O_3}$ = 212mm; $\overline{P_{33}O_3}$ = 2680mm; $\overline{P_{34}O_3}$ = 320mn

(i) For the projector $P_{34}$
With a = 320mm and f = 30mm;

$$\frac{1}{320} + \frac{1}{b} = \frac{1}{30}$$

then, b = 33.10mm
c = 33.10 / 82.76 = 0.40

(ii) For the projectors $P_{33}$ and $P_{35}$
With a = 268mm and f = 30mm;

$$\frac{1}{268} + \frac{1}{b} = \frac{1}{30}$$

then, b = 33.78mm
c = 33.78 / 84.45 = 0.40

(iii) For the projectors $P_{32}$ and $P_{36}$
With a = 212mm and f = 20mm;

$$\frac{1}{212} + \frac{1}{b} = \frac{1}{20}$$

then, b = 22.08mm
c = 22.08 / 55.21 = 0.40

(iv) For the projectors $P_{31}$ and $P_{37}$
With a = 260mm and f = 20mm;

$$\frac{1}{260} + \frac{1}{b} = \frac{1}{20}$$

then, b = 21.67mm
c = 21.67 / 54.17 = 0.40

As is apparent from the foregoing, the ratios as obtained for each of the group of projectors $P_{21}$ through $P_{27}$ and $P_{31}$ through $P_{37}$ are constant for each of the scales of reduction so specified, and moreover, the value b for each of the projectors decreases as the scale of reduction becomes smaller. For example, it is notable that each value b for producing 50% sculpture will be reduced to be 50% of or half as large as the value b for the production of a life-size sculpture, and that each value b for producing 40% sculpture will be reduced to be 60% less than or 40% of the value b for the production of a full-size sculpture, respectively. For this reason, the general arrangement of three-dimensional sculpture production apparatus 12 and 14 according to this invention will be made available with a substantially reduced size in the arrangement of projectors $P_{21}$ through $P_{27}$ and $P_{31}$ through $P_{37}$ accordingly to a specified scale of reduction, respectively. As a consequence, the arrangement of three-dimensional sculpture production apparatus 12 and 14 may turn to be a small and light arrangement such that it is readily portable to any desired location for use, and such that the arrangement of projectors may not obstruct any performances of operation in a three-dimensional sculptural work, and this advantage may stand out particularly when a scale of reduction of 50% or more is taken in the sculpture production, which may eventually contribute to a substantial improvement in the efficiency of sculptural work, accordingly.

With a constant ratio of c in any scale of reduction, a single set of positives may serve for the production of sculpture to a desired scale of reduction, which may then be used in a given group of projectors set on the frame for a desired scale.

In addition to the production of a three-dimensional sculpture, this arrangement can equally be adapted to the production of relief works, either.

More specifically, it may be arranged for this purpose that a third positive is prepared in the manner disclosed in Japanese Patent Publication No. 7,494/1974 prior to the loading of the pictures as taken by the arrangement of cameras 1 into the arrangement of three-dimensional sculpture production apparatus 12, 14, and then this third positive is projected in the manner as disclosed in this Japanese Patent Publication specification to obtain a relief work. In this connection, it is notable that the present invention may be adapted while projecting the third positive for the production of a relief work.

For more details of the production of a relief work, refer to Japanese Patent No 676,163, to the Japanese Patent Publications Nos. 7494/1974 and 18936/1981 etc.

Of course, it is needless to mention that any scales of reduction may be applied in practice for the production of a three-dimensional sculptural work.

Incidentally, referring further to the shape of a frame structure to be employed, it may not necessary to make the frame for use with a stereophotographic arrangement similar in shape with the one for a three-dimensional sculpture production arrangement, and so, what is required essentially is that the group of projectors of the sculpture production arrangement may be located in position corresponding in similarity to that for the group of cameras and projectors of the stereophotographic arrangement, and so, a frame structure may be prepared with any desired shape if it may satisfy this requirement, accordingly.

Now, reference is made further to the method of producing a relief work by using the arrangement according to this invention.

The term "a relief work" as used herein is directed to generally mean a carving or raised work embossed in a plane with a partial solid or three-dimensional appearance.

For the production of a relief work, a third positive transparency is required to be prepared. The preparation of this third positive transparency is made in the following manner.

For example, referring to FIG. 5(I), an object 3 to be pictured is projected preliminarily with a screen 4a (see FIGS. 6(I) and (II)). Next, the object 3 is photographed by using the group of cameras $C_3$, $C_4$ and $C_5$ belonging to the stereophotographic apparatus 1. For convenience of description, the picture taken by the camera $C_4$ is defined as a first positive picture, and the pictures taken by the cameras $C_3$ and $C_5$ are defined as a second positive picture.

In the following, the process of producing a relief work on the right half part of the object 3 is described for clarity of explanation.

Now, it is assumed that a reference plane GP which is perpendicular to a segment $\overline{C_4Y}$ defined by a phantom perpendicular Y and passing the lens of the camera $C_4$ in place of the object 3, and upon this plane a second positive picture taken by the camera $C_5$ is projected by using the projector 15.

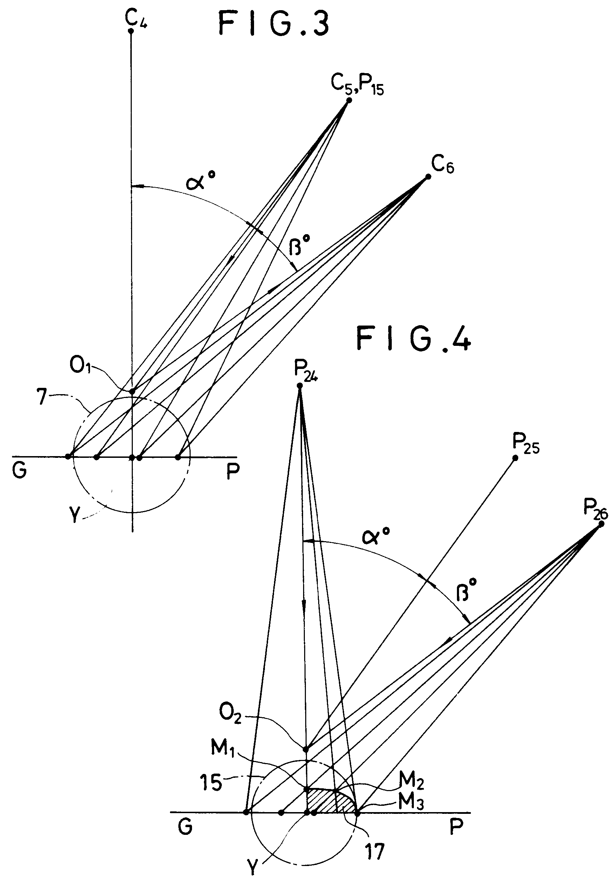

FIG. 3 shows the state in which the second positive picture of the camera $C_5$ is projected by using the projector $P_{15}$.

Next, using a camera $C_6$ disposed at an angle $\beta$ degree centered at the point $O_1$, an optical image projected upon the reference plane GP from the projector $P_{15}$ is photographed. The picture taken by this camera $C_6$ may serve a third positive picture used for the production of the normal life-size relief work.

For the preparation of a relief work reduced to a certain scale in this embodiment of the invention, a further operation is required as follows.

In the case that a relief work is to be made on 50% down scale as in the case of a three-dimensional sculptural work, it is required that the normal third positive picture prepared in the foregoing step is reduced to be a half scale or 50% smaller accordingly to the required scale of reduction noted above (hereinafter, this reduced positive picture is referred to as "a reduced third positive" for clarity).

In the like manner, the first positive picture as taken by the camera $C_4$ is reduced to be a half scale or 50% smaller in accordance with the required scale of reduction (hereinafter, this is referred to as "reduced first positive").

Then, thus-obtained reduced first and third positives are loaded into the projectors $P_{24}$ and $P_{26}$ of the three-dimensional sculpture production apparatus 12 to be projected upon the reference plane, and this state is shown in FIG. 4.

As shown typically in FIG. 4, firstly placed is a mass of material such as clay upon the reference plane GP, and then, a projector $P_{26}$ loaded with the third positive is operated to throw overlapping patterns of parallel lines or stripes onto the reference plane in such a manner that there are seen a plurality of crossings $M_1$, $M_2$, $M_3$ ,,,,, defined with the parallel lines projected from the projector $C_{26}$ on the surface of the mass of clay, and the operator or sculptor may shape or model the mass by adding or removing clay to make proper striped patterns so as to obtain a 50% down-scaled relief work 17 on the reference plane GP, accordingly.

While the foregoing description referred to the relief modeling work only on the right half side of the work 17, it may be effected equally in the entirely symmetrical manner on the left half part thereof with the employment of the cameras $C_3$, $C_2$ in place of those $C_5$, $C_6$ and of the projectors $P_{22}$ in place of the one $P_{26}$, respectively.

There may be attained many equally advantageous effects available from the compactness of the sculpture production arrangement and the projectors therefor in the manufacture of a reduced relief work, which is exactly like in the case of producing a reduced three-dimensional sculptural work.

While it was described in connection with the three-dimensional sculpture production process that a third positive picture was prepared to a desired scale of reduction so as to form a reduced third positive, this invention is not restricted in use to this embodiment, but a reduced second positive may of course be processed to obtain a reduced third positive, accordingly.

It is an essential matter to the invention in the production of a relief work to obtain a reduced third positive transparency, which may be understood readily when considering the presentation on the embodiment noted above to obtain a reduced third positive, and also which may be adapted equally with ease to another art relating to the production of a relief work such as disclosed in, Japanese Patent Publications 7494/1974 and 18936/1981 and the like, and therefore, no further explanation is given on such applications.

As stated fully hereinbefore, according to the method of and apparatus for producing a three-dimensional sculptural work according to the present invention, as it is possible in practice to make the distance "b" from the projector lens to the mass of material smaller in accordance with a desired scale of reduction in the production of a sculptural work, the dimensions of such projectors may be made smaller in size, thus making smaller the entire arrangement for producing a sculptural work, accordingly, and thus making the transportation of the entire arrangement so easier than the conventional arrangement.

As stated also hereinbefore, since each of the projectors may be made smaller in size, they may not project outwardly from the extension of the frame structure, and there is no obstruction to the operator's manual operations by reaching from the outside of the frame structure in the production of a sculpture work on a reduced scale, thus effecting a substantial efficiency in the production work of such a down-scaled sculpture, accordingly.

Furthermore, nothing that the distance of "b" as observed in connection with the disposition of each of the projectors become a value which may reduce at the same rate in accordance with a desired scale of reduction in the production of a sculptural work according to the present invention, it is an easy job to adjust the location of such projectors when installed onto the frame structure.

In addition, according to the present invention, as the ratio "c" with respect to the distance "b" in a given projector is constant, the scale of reduction of a positive transparency to be loaded into such projectors may turn to be constant, thus making it possible to commonly use positives of the same scale of reduction, and thus making easier the preparation of such positives in the sculptural work. From such standpoint, it is feasible in practice to improve the efficiency of sculptural work, accordingly.

Moreover, according to the present invention, there is attainable a better finish in the production of a three-dimensional sculptural work, free from an effect of becoming thinner than the actual original, thus contributing to an improvement in accuracy in finish of the work.

Furthermore, the process of this invention may equally be adapted to the production of a relief work, in which there may also be attained a similar advantageous effect to the case of three-dimensional sculptural work.

## Claims

1. A method of producing three-dimensional sculpture works on a desired reduced scale, comprising:

   a) a photographing process (1) comprising the steps of:

   arranging at a predetermined distance from an object (3) to be reproduced a plurality of photographic cameras (C1-C7) and a first plurality of optical projectors (P1-P3),

loading each of said first plurality of projectors (P1-P3) with a transparent screen (4a) having a plurality of parallel lines (S1-Sn),

projecting said transparent screens (4a) onto said object (3) from said first plurality of projectors (P1-P3), and

taking with said cameras (C1-C7) photographic pictures (4b) of the striped pattern resulting from the projection of said screens (4a) onto said object (3); and
b) a three-dimensional sculpture works producing process (6; 12; 14) comprising the steps of:

arranging in similar relation with respect to said first plurality of projectors arranged around said object (3) and at a reduced distance a second plurality of projectors (P11-P17) around a mass (7) of material to be molded,

loading said second plurality of projectors (P11-P17) with said photographic pictures (4b) taken with said cameras (C1-C7),

projecting said photographic pictures (4b) with said second plurality of projectors (P11-P17) onto said mass (7) of material to be molded, and

modelling manually said mass (7) of material to make the projected lines meet and coincide with each other to obtain a reduced three-dimensional sculptural copy of the object (3);

characterized in that in said three-dimensional sculpture works producing process the focal length of each of the second plurality of projectors (P21-27, P31-P37) and the photographic pictures (4b) to be loaded with said second plurality of projectors (P21-P27, P31-37) are respectively reduced in scale by a desired reduction scale with respect to the focal length of each of said cameras (C1-C7) and the photographic pictures (4b) taken with said cameras (C1-C7),

whereby the distance between said second plurality of projectors (P21-27, P31-37) and said mass (15, 16) of material to be molded will be reduced by said desired reduction scale with respect to the distance between said first plurality of projectors and said object.

2. An apparatus for producing three-dimensional sculpture works on a desired reduced scale, comprising:
a) means for photographing (1) comprising:
a plurality of photographic cameras (C1-C7) centered around an object (3) to be reproduced at a predetermined distance from said object,
a first plurality of optical projectors (P1-P3) centered around said object (3) at a predetermined object distance from said object, each of said first plurality of projectors (P1-P3) being loaded with a transparent screen (4a) having a plurality of parallel lines (S1-Sn),

photographic pictures (4b) taken with said cameras (C1-C7) and exhibiting a the striped pattern resulting from the projection of said screens (4a) onto said object (3); and
b) means for producing a three-dimensional sculpture works (6; 12; 14) comprising:

a second plurality of projectors (P11-P17) arranged around a mass (7) of material to be molded in similar relation with respect to said first plurality of projectors arranged around said object (3) and at a reduced distance, and being loaded with said photographic pictures (4b) taken with said cameras (C1-C7) for projecting said photographic pictures (4b) onto said mass (7) of material to be molded, and

said mass (7) of material to be modelled manually to make the projected lines meet and coincide with each other to obtain a reduced three-dimensional sculptural copy of the object (3);

characterized in that in said means for producing a three-dimensional sculpture works the focal length of each of the second plurality of projectors (P21-27, P31-P37) and the photographic pictures (4b) to be loaded with said second plurality of projectors (P21-P27, P31-P37) are respectively reduced in scale by a desired reduction scale with respect to the focal length of each of said cameras (C1-C7) and the photographic pictures (4b) taken with said cameras (C1-C7),

wherein the distance between said second plurality of projectors (P21-27, P31-37) and said mass (15,16) of material to be molded is reduced by said desired reduction scale with respect to the distance between said first plurality of projectors and said object.

**Patentansprüche**

1. Methode zur Herstellung von in einem gewünschten Maßstab verkleinerten dreidimensionalen Plastiken, die folgende Verfahren umfaßt:
a) ein fotografisches Verfahren (1) mit folgenden Schritten:

Anordnen einer Anzahl von Kameras (C$_1$-C$_7$) und einer ersten Anzahl von Projektionsapparaten (P$_1$-P$_3$) in einem festgelegten Abstand zu einem zu reproduzierenden Objekt (3),

Einsetzen von transparenten Rastern (4a) mit einer Vielzahl von parallelen Linien (S$_1$-S$_n$) in jeden der ersten Anzahl der Projektionsapparate (P$_1$-P$_3$),

Projizieren der transparenten Raster (4a) von der ersten Anzahl von Projektionsapparaten (P$_1$-P$_3$) auf das Objekt (3),

Fotografieren der Bilder (4b) des Streifenmusters, das durch Projizieren der Raster (4a) auf das Objekt (3) erzielt wurde, und

b) ein Verfahren zur Herstellung von dreidimensionalen Plastiken (6; 12; 14), das die folgenden Schritte beinhaltet:

Anordnen einer zweiten Anzahl von Projektionsapparaten (P$_{11}$-P$_{17}$) um eine zu formende Materialmasse (7) herum im gleichen Verhältnis wie die erste Anzahl von Projektionsapparaten und in verringertem Abstand um das Objekt (3) herum,

Einsetzen der mit Hilfe der Kameras (C$_1$-C$_7$) aufgenommenen Bilder (4b) in die zweite Anzahl von Projektionsapparaten (P$_{11}$-P$_{17}$),

Projizieren der Bilder (4b) mit Hilfe der zweiten Anzahl von Projektionsapparaten (P$_{11}$-P$_{17}$) auf die zu formende Materialmasse (7) und

manuelles Formen der Materialmasse (7), so daß die projizierten Linien miteinander zur Deckung kommen und eine im Maßstab verkleinerte Kopie der dreidimensionalen Plastik entsprechend dem Objekt (3) entsteht,

dadurch gekennzeichnet, daß bei dem Verfahren zur Herstellung einer dreidimensionalen Plastik die Brennweite eines jeden Projektionsapparats der zweiten Anzahl (P$_{21}$-P$_{27}$, P$_{31}$-P$_{27}$) und die in die zweite Anzahl von Projektionsapparaten (P$_{21}$-P$_{27}$, P$_{31}$-P$_{37}$) einzusetzenden Bilder (4b) entsprechend im gewünschten Maßstab hinsichtlich der Brennweite jeder der Kameras (C$_1$-C$_7$) und der mit Hilfe der Kameras (C$_1$-C$_7$) aufgenommenen Bilder (4b) verkleinert werden,

wobei der Abstand zwischen der zweiten Anzahl von Projektionsapparaten (P$_{21}$-P$_{27}$, P$_{31}$-P$_{37}$) und der zu formenden Materialmasse (15, 16) gemäß dem gewünschten Verkleinerungsmaßstab hinsichtlich des Abstands zwischen der ersten Anzahl von Projektionsapparaten und dem Objekt zu verringern ist.

2. Anordnung zur Herstellung von in einem gewünschten Maßstab verkleinerten dreidimensionalen Plastiken, zu der folgendes gehört:

a) Ausrüstung zum Fotografieren (1) mit folgenden Bestandteilen:

eine Anzahl von Kameras (C$_1$-C$_7$), die in einem bestimmten Abstand um ein zu reproduzierendes Objekt (3) herum angeordnet sind,

eine erste Anzahl von Projektionsapparaten (P$_1$-P$_3$), die in einem bestimmten Abstand zu dem Objekt (3) angeordnet sind, wobei in jeden der ersten Anzahl von Projektionsapparaten (P$_1$-P$_3$) ein transparenter Raster (4a) mit einer Vielzahl paralleler Linien (S$_1$-S$_n$) einzusetzen ist,

Aufnahmen (4b), die mit den Kameras (C$_1$-C$_7$) fotografiert wurden und durch Projizieren des Rasters (4a) auf das Objekt (3) ein Streifenmuster aufweisen, und

b) Ausrüstung zur Herstellung von dreidimensionalen Plastiken (6; 12; 14), zu der folgendes gehört:

eine um eine zu formende Materialmasse (7) herum im gleichen Verhältnis wie die um das Objekt (3) herum angeordnete erste Anzahl von Projektionsapparaten und in einem verkleinerten Abstand angeordnete zweite Anzahl von Projektionsapparaten (P$_{11}$-P$_{17}$), in die die mit den Kameras (C$_1$-C$_7$) aufgenommenen Bilder (4b) zum Projizieren der Bilder (4b) auf die zu formende Materialmasse (7) eingesetzt sind, und

die manuell so zu formende Materialmasse (7), daß die projizierten Linien miteinander zur Deckung kommen, so daß eine im Maßstab verkleinerte Kopie einer dreidimensionalen Plastik entsprechend dem Objekt (3) entsteht,

dadurch gekennzeichnet, daß bei der Ausrüstung zur Herstellung einer dreidimensionalen Plastik die Brennweite eines jeden der zweiten Anzahl von Projektionsapparaten (P$_{21}$-P$_{27}$, P$_{31}$-P$_{37}$) und die in die zweite Anzahl von Projektionsapparaten (P$_{21}$-P$_{27}$, P$_{31}$-P$_{37}$) einzusetzenden Aufnahmen (4b) in einem gewünschten Verkleinerungsmaßstab in bezug auf die Brennweite einer jeden Kamera (C$_1$-C$_7$) und die mit Hilfe der Kameras (C$_1$-C$_7$) fotografierten Aufnahmen (4b) verkleinert werden, wobei der Abstand zwischen der zweiten Anzahl von Projektionsapparaten (P$_{21}$-P$_{27}$, P$_{31}$-P$_{37}$) und der zu formenden Materialmasse (15, 16) im gewünschten Verkleinerungsmaßstab in bezug auf den Abstand zwischen der ersten Anzahl von Projektionsapparaten und dem Objekt verkleinert ist.

**Revendications**

1. Procédé pour produire des oeuvres de sculpture tridimensionnelles à une échelle réduite souhaitée, comprenant :

a) un processus photographique (1) comprenant les étapes consistant à :

- agencer à une distance prédéterminée d'un objet (3) à reproduire une pluralité d'appareils photographiques (C1-C7) et une première pluralité de projecteurs optiques (P1-P3),

- charger chacun des projecteurs (P1-P3) de ladite première pluralité d'un écran transparent (4a) ayant une pluralité de lignes parallèles (S1-Sn),
- projeter lesdits écrans transparents (4a) sur ledit objet (3) à partir de ladite première pluralité de projecteurs (P1-P3), et
- prendre avec lesdits appareils photographiques (C1-C7) des images (4b) du motif à bandes résultant de la projection desdits écrans (4a) sur ledit objet (3) ; et

b) un processus de production d'oeuvres de sculpture tridimensionnelles (6,12,14) comprenant les étapes consistant à :

- agencer, en relation semblable par rapport à ladite première pluralité de projecteurs agencés autour dudit objet (3) et à une distance réduite, une seconde pluralité de projecteurs (P11-P17) autour d'une masse (7) de matière à mouler,
- charger ladite seconde pluralité de projecteurs (P11-P17) avec lesdites images photographiques (4b) prises avec lesdits appareils (C1-C7),
- projeter lesdites images photographiques (4b) avec ladite seconde pluralité de projecteurs (P11-P17) sur ladite masse (7) de matière à mouler, et
- modeler manuellement ladite masse (7) de matière pour faire que les lignes projetées se rencontrent et coïncident l'une avec l'autre pour obtenir une copie de sculpture tridimensionnelle réduite de l'objet (3) ;

caractérisé en ce que, dans ledit processus de production d'oeuvres de sculpture tridimensionnelles, la distance focale de chacun des projecteurs de ladite seconde pluralité (P21-P27, P31-P37) et les images photographiques (4b) à charger avec ladite seconde pluralité de projecteurs (P21-P27,P31-37) sont respectivement réduites à une échelle de réduction souhaitée par rapport à la distance focale de chacun desdits appareils photographiques (C1-C7) et les images photographiques (4b) prises avec lesdits appareils (C1-C7), la distance entre ladite seconde pluralité de projecteurs (P21-27,P31-37) et ladite masse (15,16) de matière à mouler étant réduite à ladite échelle de réduction souhaitée par rapport à la distance entre ladite première pluralité de projecteurs et ledit objet.

2. Appareil pour produire des oeuvres de sculpture tridimensionnelles à une échelle réduite souhaitée, comprenant :

a) des moyens photographiques (1) comprenant :

- une pluralité d'appareils photographiques (C1-C7) centrés autour d'un objet (3) à reproduire à une distance déterminée dudit objet,
- une première pluralité de projecteurs optiques (P1-P3) centrés autour dudit objet (3) à une distance prédéterminée dudit objet, chacun des projecteurs (P1-P3) de ladite première pluralité étant chargé avec un écran transparent (4a) ayant une pluralité de lignes parallèles (S1-Sn),
- des images photographiques (4b) prises avec lesdits appareils (C1-C7) et montrant un motif à bandes résultant de la projection desdits écrans (4a) sur ledit objet (3) ; et

b) des moyens pour produire des oeuvres de sculpture tridimensionnelles (6,12,14) comprenant :

- une seconde pluralité de projecteurs (P11-P17) agencés autour d'une masse (7) de matière à mouler en relation semblable par rapport à ladite première pluralité de projecteurs agencés autour dudit objet (3) et à une distance réduite, et chargés avec lesdites images photographiques (4b) prises avec lesdits appareils photographiques (C1-C7) pour projeter lesdites images photographiques (4b) sur ladite masse (7) de matière à mouler, et
- ladite masse (7) de matière à mouler étant modelée manuellement pour faire se rencontrer et coïncider les lignes projetées l'une avec l'autre pour obtenir une copie de sculpture tridimensionnelle réduite de l'objet (3) ;

caractérisé en ce que, dans lesdits moyens pour produire des oeuvres de sculpture tridimensionnelles, la distance focale de chacun des projecteurs (P21-27, P31-P37) de la seconde pluralité et les images photographiques (4b) à charger avec ladite seconde pluralité de projecteurs (P21-P27,P31-P37) sont respectivement réduites à une échelle de réduction souhaitée par rapport à la distance focale de chacun desdits appareils photographiques (C1-C7) et les images photographiques (4b) prises avec lesdits appareils (C1-C7), la distance entre ladite seconde pluralité de projecteurs (P21-27,P31-37) et ladite masse (15,16) de matière à mouler étant réduite à ladite échelle de réduction souhaitée par rapport à la distance entre ladite première pluralité de projecteurs et ledit objet.

# FIG.1

# FIG.2

F I G.3

F I G.4

## F I G.5(I)

## F I G.6(I)

## F I G.6(II)

F I G.5(II)

F I G .7